# EUROPÄISCHE PATENTSCHRIFT

(11) **EP 2 814 699 B1**
(45) Veröffentlichungstag und Bekanntmachung des Hinweises auf die Patenterteilung: **09.09.2015**
(21) Anmeldenummer: 13704355.0
(22) Anmeldetag: 08.02.2013
(51) Int. Cl.: B60R 25/24

(54) **STARTSYSTEM FÜR EINEN KRAFTWAGEN, KRAFTWAGEN MIT EINEM STARTSYSTEM UND VERFAHREN ZUM BETREIBEN EINES STARTSYSTEMS FÜR EINEN KRAFTWAGEN**
START SYSTEM FOR A CAR, CAR HAVING A START SYSTEM, AND METHOD FOR OPERATING A START SYSTEM FOR A CAR
SYSTÈME DE DÉMARRAGE DE VÉHICULE, VÉHICULE ÉQUIPÉ D'UN SYSTÈME DE DÉMARRAGE ET PROCÉDÉ PERMETTANT DE FAIRE FONCTIONNER UN SYSTÈME DE DÉMARRAGE D'UN VÉHICULE

(30) Priorität: 15.02.2012 DE 102012003015
(43) Veröffentlichungstag der Anmeldung: 24.12.2014
(73) Patentinhaber: Audi AG, 85045 Ingolstadt (DE)
(72) Erfinder: WARSCHAT, Ulf, 85652 Pliening (DE); OTT, Tobias, 85283 Wolnzach (DE); SASSMANNSHAUSEN, Patrick, 85113 Böhmfeld (DE)
(74) Vertreter: Brandt, Kai
(86) Internationale Anmeldenummer: PCT/EP2013/000384
(87) Internationale Veröffentlichungsnummer: WO 2013/120596

(56) Entgegenhaltungen:
- DE-A1-102004 007 679
- DE-A1-102010 001 652

## Beschreibung

Die Erfindung betrifft ein Verfahren zum Betreiben eines Startsystems für einen Kraftwagen und ein Startsystem für einen Kraftwagen mit einem eine Steuereinrichtung, eine Starteinrichtung, eine Überwachungseinrichtung und eine Authentifizierungseinrichtung umfassenden kraftwagenseitigen Startsystem sowie wenigstens einem tragbaren Codegeber.

Kraftwagen werden zunehmend mit Startsystemen ausgestattet, bei welchen zum Starten eines Motors des Kraftwagens kein Schlüssel mehr in ein Zündschloss gesteckt und umgedreht werden muss. Stattdessen gibt es vielfach Lösungen, bei welchen ein als Transponder ausgebildeter tragbarer Codegeber lediglich noch von dem Fahrer des Kraftwagens mitgeführt werden muss, wobei der Fahrer nur noch eine Starteinrichtung, welche üblicherweise einen Start-Stopp-Knopf aufweist, betätigen muss, um den Motor des Kraft-wagens zu starten.

Nach einem Öffnen des Fahrzeugs und Platznehmen des Fahrers auf dem Fahrersitz sowie Betätigen des Start-Stopp-Knopfes der normalerweise immer aktivierten Starteinrichtung überprüft eine Überwachungseinrichtung üblicherweise, ob sich der tragbare Codegeber innerhalb des Kraftwagens, insbesondere innerhalb des Fahrgastraums des Kraftwagens, befindet. Insbesondere sendet dabei die Überwachungseinrichtung ein Anfragesignal aus, welches der tragbare Codegeber empfängt, falls sich dieser innerhalb des Überwachungsbereichs befindet und seinerseits ein Antwortsignal aussendet, welches die Überwachungseinrichtung empfängt, wodurch diese erkennt, dass sich der tragbare Codegeber tatsächlich innerhalb des Überwachungsbereichs, sprich innerhalb des Fahrgastraums des Kraftwagens, befindet. Sobald von dem Startsystem erkannt worden ist, dass sich der tragbare Codegeber innerhalb des Kraftwagens befindet, wird der Motor gestartet. Bei herkömmlichen Startsystemen ist üblicherweise die Überwachungseinrichtung immer aktiv, und somit auch dann, wenn das Fahrzeug abgesperrt ist und kein Fahrgast im Fahrgastraum ist, sodass diese im Prinzip permanent das Anfragesignal aussendet, um zu überprüfen, ob sich der Codegeber gegebenenfalls innerhalb des Kraftwagens befindet. Es gibt auch Startsysteme, bei welchen die Überwachungseinrichtung erst dann das Anfragesignal aussendet, sobald der Start-Stop-Knopf betätigt worden ist. In beiden Fällen besteht ein erhöhtes Risiko für einen Diebstahl eines Kraftwagens, welcher mit einem solchen Startsystem ausgestattet ist. Nachdem sich ein Unberechtigter einen unautorisierten Zugang zu dem Kraftwagen verschafft hat, beispielsweise indem er das Türschloss aufgebrochen hat, kann er das von der Überwachungseinrichtung ausgesendete Anfragesignal manipulieren, sodass der Kraftwagen auch ohne Vorhandensein eines Schlüssels oder tragbaren Codegebers gestartet und somit auch gestohlen werden kann.

Dokument DE 10 2004 007679 A1 offenbart ein Verfahren und Startsystem gemäß den Ansprüchen 1 und 11, wobei aber nicht die Merkmale
- Überprüfen mittels einer Überwachungseinrichtung des Startsystems, ob sich ein tragbarer Codegeber des Startsystems innerhalb eines Überwachungsbereichs der Überwachungseinrichtung befindet;
- Deaktivieren einer Starteinrichtung des Startsystems mittels einer Steuereinrichtung des Startsystems, falls sich der tragbare Codegeber nicht innerhalb des Überwachungsbereichs befindet;
   offenbart werden.

Es ist die Aufgabe der vorliegenden Erfindung, eine Lösung bereitzustellen, mittels welcher ein verbesserter Diebstahlschutz von Kraftwagen erzielt wird.

Diese Aufgabe wird durch ein Verfahren zum Betreiben eines Startsystems für einen Kraftwagen und ein Startsystem für einen Kraftwagen sowie einen Kraftwagen mit einem Startsystem mit den Merkmalen der unabhängigen Patentansprüche gelöst.

Ein erfindungsgemäßes Verfahren zum Betreiben eines Startsystems für einen Kraftwagen umfasst die folgenden Schritte:
- Erkennen einer Verriegelung des Kraftwagens durch das Startsystem und Überprüfen mittels einer Überwachungseinrichtung des Startsystems, ob sich ein tragbarer Codegeber des Startsystems innerhalb eines Überwachungsbereichs der Überwachungseinrichtung befindet;
- Deaktivieren einer Starteinrichtung des Startsystems mittels einer Steuereinrichtung des Startsystems, falls sich der tragbare Codegeber nicht innerhalb des Überwachungsbereichs befindet;
- Betätigen eines Bedienelements des tragbaren Codegebers und drahtloses Aussenden eines das Entriegeln zumindest einer Tür des Kraftwagens initiierenden Entriegelungssignals sowie eines Identitätsdaten umfassenden Identitätssignals durch den tragbaren Codegeber;
- Empfangen des Entriegelungssignals und des Identitätssignals durch das kraftwagenseitige Startsystem;
- Überprüfen mittels der Steuereinrichtung, ob die mit dem Identitätssignal empfangenen Identitätsdaten mit in dem Startsystem abgespeicherten Identitätsdaten übereinstimmen;
- Aktivieren der Starteinrichtung mittels der Steuereinrichtung, falls die mit dem Identitätssignal empfangenen Identitätsdaten mit den in dem Startsystem abgespeicherten Identitätsdaten übereinstimmen.

Mit anderen Worten ist es erfindungsgemäß vorgesehen, dass die Starteinrichtung des Startsystems immer dann deaktiviert wird, sobald der Kraftwagen verriegelt wird und sich der tragbare Codegeber nicht innerhalb des Kraftwagens befindet. Zum Wiederaktivieren der Starteinrichtung ist es erfindungsgemäß erforderlich, dass ein entsprechendes Bedienelement des tragbaren Codegebers aktiv durch einen entsprechenden Benutzer betätigt werden muss. Erst dann wird zum einen das Entriegelungssignal zum Entriegeln des Kraftwagens ausgesendet und zum anderen ein Identitätsdaten umfassendes Identitätssignal ebenfalls durch den tragbaren Codegeber ausgesendet. Erst nach einem erfolgreichen Abgleich der von dem tragbaren Codegeber ausgesendeten Identitätsdaten mit den entsprechend innerhalb des Startsystems abgespeicherten Identitätsdaten wird ein Wiederaktivieren der Startseinrichtung ermöglicht.

Durch die gleichzeitige Überprüfung, ob sich der tragbare Codegeber innerhalb des Kraftwagens befindet, sobald eine Verriegelung des Kraftwagens erfolgt, kann eine unerwünschte Deaktivierung der Starteinrichtung vermieden werden. Beispielsweise ist es denkbar, dass eine Zentralverriegelung durch Betätigen eines innerhalb des Kraftwagens vorgesehenen Schalters erfolgt, wobei der Fahrer nach wie vor selbst in dem Kraftwagen sitzt. Eine Deaktivierung der Starteinrichtung wäre in so einem Fall nicht sinnvoll, da zum Starten des Motors, der ganz allgemein beispielsweise ein Verbrennungsmotor, ein Elektromotor, ein Hybrid-Antrieb oder eine sonstige Antriebseinrichtung sein kann, erst wieder das Bedienelement des tragbaren Codegebers betätigt werden müsste, um nach einem Ausschalten des Motors diesen wieder starten zu können. Auch solche Fälle, bei welchen eine geschwindigkeitsabhängige automatische Verriegelung des Kraftwagens stattfindet, werden durch die erfindungsgemäße Lösung berücksichtigt. Solange sich der tragbare Codegeber innerhalb des Kraftwagens befindet, erfolgt trotz einer Verriegelung des Kraftwagens keine Deaktivierung der Starteinrichtung, sodass der Motor jederzeit nach einem Ausschalten wieder gestartet werden kann.

Dadurch, dass immer ein aktives Betätigen des Bedienelements des tragbaren Codegebers erforderlich ist, um die deaktivierte Starteinrichtung wieder zu aktivieren, kann effektiv verhindert werden, dass ein Kraftwagen mit einem solchen Startsystem ohne Weiteres gestohlen werden kann, nachdem sich ein Dieb einen unautorisierten Zugang zu dem Kraftwagen verschafft hat. Solange der Dieb nämlich nicht selbst das entsprechende Bedienelement des tragbaren Codegebers betätigen kann, bleibt die Starteinrichtung des Startsystems deaktiviert, sodass der Motor des Kraftwagens gar nicht erst gestartet werden kann. Die eingangs erwähnte Funkverlängerung des Anfragesignals der Überwachungseinrichtung als auch die Funkverlängerung des Antwortsignals des tragbaren Codegebers bleibt somit wirkungslos, solange die Starteinrichtung selbst nicht aktiviert ist. Mit anderen Worten kann also bei verriegeltem Kraftwagen und entsprechend deaktivierter Starteinrichtung dem Startsystem nicht vorgetäuscht werden, dass sich der tragbare Codegeber innerhalb des Kraftwagens befindet, sodass ein unzulässiges Starten des Motors des Kraftwagens auch in einem solchen Fall unterbunden wird.

Somit ist ein verbessertes Verfahren zum Betreiben eines Startsystems für einen Kraftwagen geschaffen, mittels welchem ein erhöhter Diebstahlschutz erzielt werden kann.

Bei einer deaktivierten Starteinrichtung ist ein Betriebszustand eingestellt, bei dem insbesondere keine Startmöglichkeit der Antriebseinrichtung des Fahrzeugs gegeben ist, insbesondere durch Betätigen eines Start-Stopp-Bedienelements keinerlei Startsignal an ein Steuergerät erzeugt wird.

Bei einer vorteilhaften Ausführungsform der Erfindung überprüft die Überwachungseinrichtung, ob sich der tragbare Codegeber innerhalb des im Wesentlichen den Fahrgastraum des Kraftwagens abdeckenden Überwachungsbereichs befindet, indem die Überwachungseinrichtung ein Anfragesignal aussendet, und der tragbare Codegeber das Anfragesignal empfängt, falls sich dieser innerhalb des Überwachungsbereichs befindet und seinerseits ein Antwortsignal aussendet, welches die Überwachungseinrichtung empfängt, wodurch diese erkennt, dass sich der tragbare Codegeber innerhalb des Überwachungsbereichs befindet. Mit anderen Worten ist der tragbare Codegeber als Transponder ausgebildet, welcher auf ein empfangenes Anfragesignal der Überwachungseinrichtung ein entsprechendes Antwortsignal aussendet, wodurch überprüft werden kann, ob sich der tragbare Codegeber innerhalb des Kraftwagens befindet.

Eine weitere vorteilhafte Ausführungsform der Erfindung sieht vor, dass die Überwachungseinrichtung ausschließlich bei aktivierter Starteinrichtung aktiviert ist und überprüft, ob sich der tragbare Codegeber des Startsystems innerhalb des Überwachungsbereichs befindet. Ein permanentes Aussenden von Anfragesignalen der Überwachungseinrichtung kann somit unterbleiben.

Eine weitere vorteilhafte Ausführungsform der Erfindung sieht vor, dass falls die mit dem Identitätssignal empfangenen Identitätsdaten nicht mit den in dem Startsystem abgespeicherten Identitätsdaten übereinstimmen, der tragbare Codegeber innerhalb eines vorgegebenen Wirkbereichs eine Authentifizierungseinrichtung des Startsystems positioniert und hinsichtlich seiner Berechtigung zum Aktivieren der Starteinrichtung überprüft wird, und die Steuereinrichtung die Starteinrichtung aktiviert, falls eine Berechtigung vorliegt. Beispielsweise sind Fälle denkbar, in welchen der tragbare Codegeber durchaus eigentlich dazu berechtigt wäre, die Starteinrichtung zu aktivieren, wobei es aber beispielsweise aufgrund einer Störung der Übertragung der Identitätsdaten oder eines Defekts innerhalb des Startsystems zu einer fehlerhaften oder gar keinen Übertragung des Identitätssignals kommt. Infolgedessen kann auch kein Abgleich oder passender Abgleich zwischen den Identitätsdaten, welche innerhalb des tragbaren Codegebers abgespeichert sind, und dem im Startsystem selbst hinterlegten Identitätsdaten erfolgen. Vorteilhafterweise wird eine Art "Notstartsystem" durch die Authentifizierungseinrichtung, welche beispielsweise in Form einer so genannten Transponderschule ausgebildet sein kann, zur Verfügung gestellt. Die Authentifizierungseinrichtung sendet beispielsweise immer wieder ein Anfragesignal aus, welches lediglich eine Reichweite innerhalb des Wirkbereichs der Authentifizierungseinrichtung aufweist. Dieser beträgt nur wenige Zentimeter, sodass der tragbare Codegeber mehr oder minder unmittelbar an die Authentifizierungseinrichtung angelegt werden muss, um die Berechtigungsprüfung durchzuführen. Sobald das Anfragesignal ausgesendet worden ist, geht die Authentifizierungseinrichtung für eine vorbestimmte Zeitdauer in einen Empfangsmodus. Falls der tragbare Codegeber innerhalb des Wirkbereichs positioniert ist, empfängt dieser das Anfragesignal und sendet seinerseits wiederum ein Antwortsignal aus, welches die Authentifizierungseinrichtung empfängt. Falls es sich dabei um ein korrektes Antwortsignal handelt, wird eine entsprechende Berechtigung des tragbaren Codegebers festgestellt. Sobald also ein autorisierter tragbarer Codegeber vorliegt, kann dieser eine Wiederaktivierung der Starteinrichtung initiieren.

Für den Fall, dass zumindest eine der Türen des Kraftwagens mittels des tragbaren Codegebers jedoch ohne das Betätigen des Bedienelements des tragbaren Codegebers entriegelt wird, ist es erfindungsgemäß vorgesehen, dass der tragbare Codegeber ebenfalls innerhalb eines vorgegebenen Wirkbereichs der Authentifizierungseinrichtung des Startsystems positioniert und hinsichtlich seiner Berechtigung zum Aktivieren der Starteinrichtung überprüft wird, und die Steuereinrichtung die Starteinrichtung aktiviert, falls eine Berechtigung vorliegt. Dadurch soll ein problemloses Starten des Kraftwagens auch dann ermöglicht werden, falls ein Benutzer des Kraftwagens sich dazu entschließen sollte, beispielsweise die Fahrertür des Kraftwagens durch ein konventionelles Einstecken des als Schlüssel ausgebildeten tragbaren Codegebers in ein entsprechendes Schloss der Fahrertür und Betätigen des Schlosses zu entriegeln. Beispielsweise könnte es denkbar sein, dass aufgrund einer leeren Batterie des tragbaren Codegebers keine Aussendung des Entriegelungssignals und des Identitätssignals mehr möglich ist, sodass ein manuelles Entsperren des Kraftwagens erforderlich ist. Für diesen Fall kann ebenfalls mittels der Authentifizierungseinrichtung auf einfache Weise eine Aktivierung der Starteinrichtung herbeigeführt werden, falls eine entsprechende Berechtigung des tragbaren Codegebers vorliegen sollte.

Eine weitere vorteilhafte Ausführungsform der Erfindung zeichnet sich dadurch aus, dass, falls zumindest eine der Türen des Kraftwagens ohne Verwendung des tragbaren Codegebers entriegelt wird und sich der tragbare Codegeber nicht innerhalb des Überwachungsbereichs befindet, die Starteinrichtung nicht aktiviert wird. Mit anderen Worten bleibt die Starteinrichtung deaktiviert, falls sich jemand ohne den tragbaren Codegeber zu verwenden, also unberechtigt, Zugang zu dem Kraftwagen verschafft, sodass ein entsprechend guter Diebstahlschutz des Kraftwagens sichergestellt wird, da die Starteinrichtung deaktiviert bleibt.

In einer weiteren vorteilhaften Ausführungsform der Erfindung wird nach einem Betätigen der aktivierten Starteinrichtung mittels der Überwachungseinrichtung überprüft, ob sich der tragbare Codegeber innerhalb des Überwachungsbereichs befindet, und ein Startvorgang eines Motors des Kraftwagens ausschließlich dann mittels der Starteinrichtung initiiert wird, wenn sich der tragbare Codegeber innerhalb des Überwachungsbereichs befindet. Dadurch wird sichergestellt, dass der Kraftwagen auch tatsächlich nur dann gestartet werden kann, wenn sich der tragbare Codegeber innerhalb des Kraftwagens befindet. Beispielsweise wären Fälle denkbar, in welchen eine erste Person durch entsprechende Betätigung des tragbaren Codegebers den Kraftwagen aufschließt und dabei ebenfalls eine Aktivierung der Starteinrichtung bewirkt, eine zweite Person jedoch auf dem Fahrersitz Platz nimmt und den Kraftwagen starten möchte, ohne dass die den tragbaren Codegeber mitführende Person überhaupt in dem Kraftwagen Platz genommen hat. Würde in einem solchen Fall das Starten des Kraftwagens trotzdem ermöglicht werden, könnte die zweite Person mit dem Kraftwagen davonfahren, den Motor abschalten und den Kraftwagen allerdings nicht mehr starten, da sie den tragbaren Codegeber nicht mit sich geführt hat. Durch die erfindungsgemäße Lösung werden solche und ähnliche Fälle vermieden.

Weiterhin ist es erfindungsgemäß vorgesehen, dass bei laufendem Motor nach einem Öffnen wenigstens einer den Fahrgastraum verschließenden Tür und/oder Fenster und/oder einer Schiebedachvorrichtung die Überwachungseinrichtung überprüft, ob sich der tragbare Codegeber innerhalb des Überwachungsbereichs befindet, und ein Warnsignal ausgeben wird, falls sich der tragbare Codegeber nicht innerhalb des Überwachungsbereichs befindet. Dadurch wird sichergestellt, dass ein Fahrer des Kraftwagens augenblicklich darüber informiert wird, falls der tragbare Codegeber aus dem Innenraumbereich des Kraftwagens entfernt wird. Beispielsweise könnte ein Mitfahrer, der den tragbaren Codegeber mit sich geführt hat, aussteigen und dabei vergessen, den tragbaren Codegeber im Kraftwagen zu lassen. Dies könnte wiederum zu dem oben genannten Fall führen, dass nach einem Ausschalten des Motors dieser nicht mehr angeschaltet werden kann. Somit wird durch die Positionsüberwachung des tragbaren Codegebers nach einem Öffnen der Fahrgastraumhülle und Ausgeben einer entsprechenden Warnmeldung solchen Fällen vorgebeugt.

Eine weitere vorteilhafte Ausführungsform der Erfindung sieht vor, dass während des drahtlosen Aussendens des Entriegelungssignals mittels des tragbaren Codegebers drahtlos ein Identifizierungssignal ausgesendet wird, anhand dessen eine Überprüfung einer Berechtigung des tragbaren Codegebers zum Entriegeln des Kraftwagens durchgeführt wird. Mit anderen Worten wird also eine Berechtigungsabfrage durchgeführt, wobei der tragbare Codegeber das Entriegelungssignal aussendet, sodass der Kraftwagen nur dann entriegelt wird, falls der tragbare Codegeber entsprechend berechtigt ist. Dabei kann es sich bei dem Identifizierungssignal zur Überprüfung der Berechtigung des tragbaren Codegebers zum Aufsperren des Kraftwagens und dem zuvor bereits erwähnten Identitätssignal, mittels welchem überprüft wird, ob der tragbare Codegeber dazu berechtigt ist, die Starteinrichtung wieder zu aktivieren, um zwei unterschiedliche Signale handeln. Alternativ ist es aber auch denkbar, dass die beiden Signale in einem codierten Signal zusammengefasst sind. Zudem ist es ebenfalls möglich, dass beim Aussenden eines Verriegelungssignals ebenfalls ein weiteres Identifizierungssignal ausgesendet wird, anhand dessen überprüft wird, ob der tragbare Codegeber überhaupt zum Verriegeln des Kraftwagens berechtigt ist.

In weiterer vorteilhafter Ausgestaltung der Erfindung ist es vorgesehen, dass in dem Startsystem neue Identitätsdaten benutzerdefiniert abgespeichert und diese ebenfalls im tragbaren Codegeber und/oder wenigstens einen weiteren Codegeber abgespeichert werden. Mit anderen Worten ist es möglich, dass ein Benutzer des Kraftwagens selbst bestimmen kann, ob er die Identitätsdaten verändern will, anhand welcher die Identitätsprüfung des tragbaren Codegebers oder weiterer tragbarer Codegeber durchgeführt wird. Dadurch kann eine zusätzliche Erhöhung des Diebstahlschutzes ermöglicht werden, da der Benutzer selbstbestimmt von Zeit zu Zeit die Identitätsdaten ändern kann.

Ein erfindungsgemäßes Startsystem beziehungsweise eine erfindungsgemäße Startvorrichtung für einen Kraftwagen mit einem eine Steuereinrichtung, eine Starteinrichtung, eine Überwachungseinrichtung und eine Authentifizierungseinrichtung umfassenden kraftwagenseitigen Startsystem sowie wenigstens einem tragbaren Codegeber zeichnet sich dadurch aus, dass
- das Startsystem dazu ausgelegt ist, eine Verrieglung des Kraftwagens zu erkennen und die Überwachungseinrichtung dazu ausgelegt ist, zu überprüfen, ob sich der tragbare Codegeber innerhalb eines Überwachungsbereichs der Überwachungseinrichtung befindet;
- die Steuereinrichtung dazu ausgelegt ist, die Starteinrichtung zu deaktivieren, falls sich der tragbare Codegeber nicht innerhalb des Überwachungsbereichs befindet;
- der tragbare Codegeber wenigstens ein Bedienelement aufweist und dazu ausgelegt ist, ein ein Entriegeln zumindest einer Tür des Kraftwagens initiierendes Entriegelungssignal sowie ein Identitätsdaten umfassendes Identitätssignal drahtlos auszusenden;
- das kraftwagenseitige Startsystem dazu ausgelegt ist, das Entriegelungssignal und das Identitätssignal zu empfangen;
- die Steuereinrichtung dazu ausgelegt ist, zu überprüfen, ob die mit dem Identitätssignal empfangenen Identitätsdaten mit in dem Startsystem abgespeicherten Identitätsdaten übereinstimmen; und
- die Steuereinrichtung dazu ausgelegt ist, die Starteinrichtung zu aktivieren, falls die mit dem Identitätssignal empfangenen Identitätsdaten mit den in dem Startsystem abgespeicherten Identitätsdaten übereinstimmen.

Vorteilhafte Ausführungen des erfindungsgemäßen Verfahrens sind als vorteilhafte Ausführungen des Startsystems anzusehen, wobei hier insbesondere das Startsystem Mittel umfasst, mit dem die Verfahrensschritte durchführbar sind.

Ein erfindungsgemäßer Kraftwagen umfasst ein erfindungsgemäßes Startsystem oder eine vorteilhafte Ausführungsform des erfindungsgemäßen Startsystem.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Ausführungsbeispiele der Erfindung werden nachfolgend anhand schematischer Zeichnungen näher erläutert. Es zeigen:
- Fig. 1: eine schematische Darstellung eines Kraftwagens, in welchem ein kraftwagenseitiges Startsystem mit einer Steuereinrichtung, einer Starteinrichtung, einer Überwachungseinrichtung und einer Authentifizierungseinrichtung angeordnet ist, wobei ein tragbarer Codegeber des Startsystems außerhalb des Kraftwagens gezeigt ist;
- Fig. 2: ein schematisches Ablaufdiagramm, in welchem einzelne Schritte eines Verfahrens zum Betreiben eines Startsystems für einen Kraftwagen dargestellt sind.

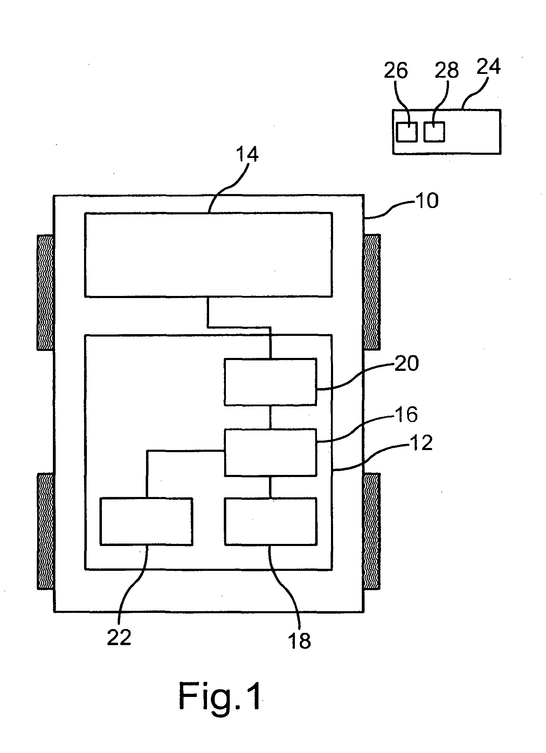

In Fig. 1 ist ein Kraftwagen 10 abgebildet, welcher ein kraftwagenseitiges Startsystem 12 und einen Motor 14 umfasst. Das kraftwagenseitige Startsystem 12 umfasst weiterhin eine Steuereinrichtung 16, eine Überwachungseinrichtung 18, eine Starteinrichtung 20 und eine Authentifizierungseinrichtung 22.

Die Steuereinrichtung 16 ist dabei mit der Überwachungseinrichtung 18, der Starteinrichtung 20 und der Authentifizierungseinrichtung 22 derart verbunden, dass zwischen diesen Elementen Signale und/oder Steuersignale ausgetauscht werden können. Weiterhin ist die Starteinrichtung 20 mit dem Motor 14 des Kraftwagens 10 derart verbunden, dass mittels der Starteinrichtung 20 der Motor 14 gestartet werden kann. Für den Fall, dass es sich bei dem Motor 14 um einen Verbrennungsmotor handelt, ist die Starteinrichtung 20 über einen hier nicht dargestellten Anlasser verbunden, welcher wiederum mit dem Motor 14 verbunden ist.

Die Starteinrichtung 20 umfasst als Start-Stopp-Bedienelement beispielsweise einen nicht dargestellten Start-Stopp-Knopf, welcher im Innenraum des Kraftwagens 10 angeordnet ist, welcher von einem Bediener betätigt werden kann, sodass ein Starten des Motors 14 initiiert werden kann. Darüber hinaus kann durch Betätigen der Start-Stopp-Taste der Motor 14 auch wieder gestoppt werden.

Des Weiteren ist in Fig. 1 ein tragbarer Codegeber 24 abgebildet, mittels welchem der Kraftwagen 10 verriegelt und entriegelt werden kann. Dazu weist der tragbare Codegeber 24 ein Bedienelement 26 zum Verriegeln und ein Bedienelement 28 zum Entriegeln des Kraftwagens 10 auf. Der tragbare Codegeber ist dazu ausgelegt, ein ein Entriegeln zumindest einer hier nicht dargestellten Tür des Kraftwagens 10 initiierendes Entriegelungssignal, ein Identifizierungssignal sowie ein Identitätsdaten umfassendes Identitätssignal drahtlos auszusenden, sobald das Bedienelement 28 betätigt wird. Des Weiteren ist der tragbare Codegeber dazu ausgelegt, ein ein Verriegeln zumindest einer hier nicht dargestellten Tür des Kraftwagens 10 initiierendes Verriegelungssignal sowie ein Identifizierungssignal drahtlos auszusenden, sobald das Bedienelement 26 betätigt wird.

Das kraftwagenseitige Startsystem 12 und der tragbare Codegeber 24 bilden ein Startsystem für den Kraftwagen 10 aus. Das Startsystem ist dazu ausgelegt, eine Verriegelung des Kraftwagens 10 zu erkennen, und die Überwachungseinrichtung 18 ist dazu ausgelegt, zu überprüfen, ob sich der tragbare Codegeber 24 innerhalb eines hier nicht dargestellten Überwachungsbereichs der Überwachungseinrichtung 18 befindet. Bei dem Überwachungsbereich handelt es sich im vorliegenden Fall um einen Fahrgastraum des Kraftwagens 10.

Weiterhin ist die Steuereinrichtung 16 dazu ausgelegt, die Starteinrichtung 20 zu deaktivieren, falls sich der tragbare Codegeber 24 nicht innerhalb des Überwachungsbereichs befindet. Das kraftwagenseitige Startsystem 12 ist wiederum dazu ausgelegt, das Entriegelungssignal und das Identitätssignal zu empfangen, wobei die Steuereinrichtung 16 ihrerseits dazu ausgelegt ist, zu überprüfen, ob die mit dem Identitätssignal empfangenen Identitätsdaten mit in dem Startsystem 12 abgespeicherten Identitätsdaten übereinstimmen. Ferner ist die Steuereinrichtung 16 dazu ausgelegt, die Starteinrichtung 20 zu aktivieren, falls die mit dem Identitätssignal empfangenen Identitätsdaten mit den in dem Startsystem abgespeicherten Identitätsdaten übereinstimmen.

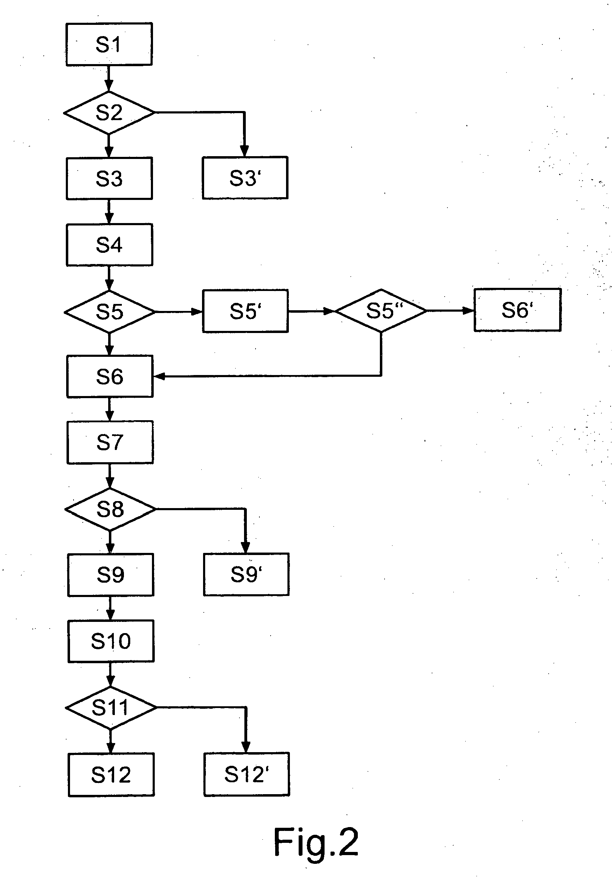

In Fig. 2 ist ein schematisches Ablaufdiagramm dargestellt, in welchem einzelne Verfahrensschritte zum Betreiben des Startsystems dargestellt sind. In Schritt S1 wird zunächst das Bedienelement 26 des tragbaren Codegebers 24 betätigt, wodurch dieser das Verriegelungssignal sowie das Identifizierungssignal aussendet. Anhand des Identifizierungssignals wird fahrzeugseitig überprüft, ob der tragbare Codegeber 24 dazu berechtigt ist, den Kraftwagen überhaupt zu verriegeln. Nach einer erfolgreichen Überprüfung des Identifizierungssignals erfolgt eine Verriegelung des Kraftwagens 10. Alternativ ist es aber ebenso möglich, dass der Kraftwagen 10 auf andere Weise verriegelt wird, beispielsweise durch ein automatisches Absperren des Kraftwagens 10 bei Überschreiten einer bestimmten Geschwindigkeit während des Fahrbetriebs, durch Betätigen eines Zentralverriegelungsschalters im Innenraum des Kraftwagens 10 oder dergleichen. Die Verriegelung des Kraftwagens 10 wird in jedem Fall durch das Startsystem erkannt.

In Schritt S2 wird mittels der Überwachungseinrichtung 18 überprüft, ob sich der tragbare Codegeber 24 innerhalb des Überwachungsbereichs der Überwachungseinrichtung 18 befindet. Bei dem Überwachungsbereich handelt es sich im vorliegenden Fall im Wesentlichen um den Fahrgastinnenraum des Kraftwagens 10. Die Überwachungseinrichtung 18 führt die genannte Überwachung durch, indem die Überwachungseinrichtung 18 ein Anfragesignal aussendet, der tragbare Codegeber 24 das Anfragesignal empfängt, falls sich dieser innerhalb des Überwachungsbereichs, also innerhalb des Kraftwagens 10, befindet, und seinerseits ein Antwortsignal aussendet, welches die Überwachungseinrichtung 18 empfängt, wodurch diese erkennt, dass sich der tragbare Codegeber 24 innerhalb des Überwachungsbereichs befindet.

In Schritt S3 deaktiviert die Steuereinrichtung 16 die Starteinrichtung 20, falls sich der tragbare Codegeber 24 nicht innerhalb des Überwachungsbereichs, also nicht innerhalb des Kraftwagens 10, befindet. Aufgrund der Deaktivierung der Starteinrichtung 20 ist nunmehr ein Starten des Motors 14 durch Betätigen der Starteinrichtung 20 des Kraftwagens 10 nicht mehr möglich. Falls sich der tragbare Codegeber 24 innerhalb des Überwachungsbereichs, also innerhalb des Kraftwagens 10, befindet, erfolgt keine Deaktivierung der Starteinrichtung 20, was durch den Schritt S3' gekennzeichnet ist. Beispielsweise sollen dadurch Fälle vermieden werden, in denen ein Fahrer noch in dem Kraftwagen 10 sitzt und eine Verriegelung stattgefunden hat. In solchen Fällen soll es nach wie vor möglich sein, dass durch Betätigen der Starteinrichtung 20 der Motor 14 des Kraftwagens wieder gestartet werden kann.

In Schritt S4 wird nun das Bedienelement 28 des tragbaren Codegebers 24 betätigt, wodurch zum einen drahtlos ein Entriegelungssignal ausgesendet wird und zum anderen ebenfalls drahtlos ein Identitätsdaten umfassendes Identitätssignal durch den tragbaren Codegeber 24 ausgesendet wird. Während des drahtlosen Aussendens des Entriegelungssignals mittels des tragbaren Codegebers 24 wird zusätzlich drahtlos ein Identifizierungssignal ausgesendet, anhand dessen eine Überprüfung einer Berechtigung des tragbaren Codegebers 24 zum Entriegeln des Kraftwagens 10 durchgeführt wird. Erst wenn die Berechtigung des tragbaren Codegebers 24 durch Überprüfung des Identifizierungssignals erfolgt ist, wird der Kraftwagen 10 wieder entriegelt. Des Weiteren empfängt das kraftwagenseitige Startsystem 12 das Entriegelungssignal sowie das Identitätssignal.

In einem nächsten Schritt S5 wird mittels der Steuereinrichtung 16 überprüft, ob die mit dem Identitätssignal empfangenen Identitätsdaten mit in dem Startsystem abgespeicherten Identitätsdaten übereinstimmen. Dafür können beispielsweise in einem nicht dargestellten Speicher der Steuereinrichtung 16 entsprechende Identitätsdaten abgespeichert sein. Darüber hinaus ist es in einem anderen hier nicht dargestellten Schritt möglich, dass ein Benutzer selbst eine Veränderung der in dem Startsystem abgespeicherten Identitätsdaten vornehmen kann und anschließend der tragbare Codegeber 24 und/oder weitere tragbare Codegeber mit den neuen Identitätsdaten versehen wird.

In einem nächsten Verfahrensschritt S6 wird die Starteinrichtung 20 mittels der Steuereinrichtung 16 aktiviert, falls die mit dem Identitätssignal empfangenen Identitätsdaten mit den in dem Startsystem abgespeicherten Identitätsdaten übereinstimmen. Nach der erfolgten Aktivierung der Starteinrichtung 20 ist es nun prinzipiell wieder möglich, den Motor 14 des Kraftwagens 10 durch Betätigen der Starteinrichtung 20 zu starten.

Falls die mit dem Identitätssignal empfangenen Identitätsdaten nicht mit den im Startsystem abgespeicherten Identitätsdaten übereinstimmen oder falls zumindest eine der Türen des Kraftwagens 10 mittels des tragbaren Codegebers 24 ohne das Betätigen des Bedienelements des tragbaren Codegebers 24 entriegelt worden ist, wird in einem Schritt S5' der tragbare Codegeber 24 innerhalb eines vorgegebenen Wirkbereichs der Authentifizierungseinrichtung 22 positioniert. Bei der Authentifizierungseinrichtung 22 kann es sich beispielsweise um eine Transponderspule handeln, welche im Innenraum des Kraftwagens 10 angeordnet ist.

In einem Schritt S5" überprüft die Authentifizierungseinrichtung 22, ob eine Berechtigung zum Aktivieren der Starteinrichtung 20 seitens des Codegebers 26 vorliegt. Die Authentifizierungseinrichtung 22 sendet beispielsweise immer wieder ein Anfragesignal aus, welches lediglich eine Reichweite innerhalb des Wirkbereichs der Authentifizierungseinrichtung 22 aufweist. Dieser beträgt nur wenige Zentimeter. Sobald das Anfragesignal ausgesendet worden ist, geht die Authentifizierungseinrichtung 22 für eine vorbestimmte Zeitdauer in einen Empfangsmodus. Falls der tragbare Codegeber 24 innerhalb des Wirkbereichs positioniert ist, empfängt dieser das Anfragesignal und sendet seinerseits wiederum ein Antwortsignal aus, welches die Authentifizierungseinrichtung 22 empfängt. Falls es sich dabei um ein korrektes Antwortsignal handelt, wird eine entsprechende Berechtigung des tragbaren Codegebers 24 festgestellt. In diesem Fall wird nachfolgend der Verfahrensschritt S6 durchgeführt, bei welchem die Steuereinrichtung 16 die Starteinrichtung 20 wiederum aktiviert. Falls keine Berechtigung des tragbaren Codegebers 24 durch die Authentifizierungseinrichtung 22 festgestellt wird, erfolgt der Schritt S6', bei welchem die Starteinrichtung 20 deaktiviert bleibt.

Für den Fall, dass zumindest eine der Türen des Kraftwagens 10 ohne den tragbaren Codegeber 24 entriegelt worden ist, und sich der tragbare Codegeber 24 auch nicht innerhalb des Überwachungsbereichs befindet, also innerhalb des Kraftwagens 10, unterbleibt ebenfalls eine Aktivierung der Starteinrichtung 20. Dies kann beispielsweise der Fall sein, wenn jemand den Kraftwagen 10 gewaltsam öffnet, um diesen zu stehlen. In diesem Fall kann zwar ein Zugang zum Innenraum des Kraftwagens 10 gegeben sein, jedoch ist es aufgrund der weiterhin deaktivierten Starteinrichtung 20 des Kraftwagens 10 nicht möglich, den Motor 14 zu starten.

In einem Verfahrensschritt S7 wird nun die aktivierte Starteinrichtung 20 betätigt, beispielsweise indem ein Benutzer den hier nicht dargestellten Start-Stopp-Knopf betätigt. In Schritt S8 überprüft die Überwachungseinrichtung 18 unmittelbar, ob der tragbare Codegeber 24 innerhalb des Überwachungsbereichs, also innerhalb des Kraftwagens 10, positioniert ist. Nach erfolgreicher Überprüfung wird in Schritt S9 ein Startvorgang des Motors 14 des Kraftwagens 10 initiiert. Falls mittels der Überwachungseinrichtung 18 jedoch festgestellt wird, dass sich der tragbare Codegeber 24 nicht innerhalb des Überwachungsbereichs, also innerhalb des Kraftwagens 10, befindet, folgt Schritt S9', bei welchem ein Starten des Motors unterbleibt.

In einem nächsten Verfahrensschritt S10 wird bei laufendem Motor 14 eine den Fahrgastraum verschließende Tür geöffnet. In Schritt S11 überprüft die Überwachungseinrichtung 18, ob sich der tragbare Codegeber 24 nach wie vor innerhalb des Überwachungsbereichs, also innerhalb des Kraftwagens 10, befindet. Falls festgestellt wird, dass sich der tragbare Codegeber nicht mehr innerhalb des Überwachungsbereichs befindet, wird in Schritt S12 ein Warnsignal ausgegeben. Beispielsweise ist es denkbar, dass ein Beifahrer den tragbaren Codegeber 24 in einer Tasche aufbewahrt, der Kraftwagen 10 bei laufendem Motor 14 angehalten wird, und der Beifahrer mitsamt dem tragbaren Codegeber 24 aus dem Kraftwagen 10 aussteigt. In diesem Fall würde zwar der Motor 14 weiterlaufen, jedoch würde der Fahrer des Kraftwagens 10 unmittelbar durch das ausgegebene Warnsignal darauf hingewiesen werden, dass sich der tragbare Codegeber 24 nicht mehr innerhalb des Kraftwagens 10 befindet. Falls jedoch in Schritt S11 mittels der Überwachungsreinrichtung 18 festgestellt wird, dass sich der tragbare Codegeber 24 nach wie vor innerhalb des Überwachungsbereichs befindet, erfolgt Schritt S12', bei welchem kein Warnsignal ausgegeben wird.

Eine Überprüfung des tragbaren Codegebers 24 mittels der Überwachungseinrichtung 18 in Schritt S11 erfolgt dabei ebenfalls, falls beispielsweise ein Fenster des Kraftwagens 10 geöffnet wird oder eine Schiebedachvorrichtung des Kraftwagens 10 geöffnet wird. Dadurch wird sichergestellt, dass der Fahrer des Kraftwagens 10 zumindest darauf hingewiesen wird, falls sich der tragbare Codegeber 24 nicht mehr innerhalb des Kraftwagens 10 befinden sollte. Eine Situation, in welcher der Motor 14 abgestellt wird und nicht mehr gestartet werden kann, weil der tragbare Codegeber 24 nicht mehr im Eingriffsbereich des Fahrers ist, kann dadurch effektiv verhindert werden.

## Patentansprüche

1. Verfahren zum Betreiben eines Startsystems für einen Kraftwagen (10), mit den folgenden Schritten:
- Erkennen einer Verriegelung des Kraftwagens (10) durch das Startsystem und Überprüfen mittels einer Überwachungseinrichtung (18) des Startsystems, ob sich ein tragbarer Codegeber (24) des Startsystems innerhalb eines Übenrvachungsbereichs der Überwachungseinrichtung (18) befindet;
- Deaktivieren einer Starteinrichtung (20) des Startsystems mittels einer Steuereinrichtung (16) des Startsystems, falls sich der tragbare Codegeber (24) nicht innerhalb des Überwachungsbereichs befindet;
- Betätigen eines Bedienelements (28) des tragbaren Codegebers (24) und drahtloses Aussenden eines das Entriegeln zumindest einer Tür des Kraftwagens (10) initiierenden Entriegelungssignals sowie eines Identitätsdaten umfassenden Identitätssignals durch den tragbaren Codegeber (24);
- Empfangen des Entriegelungssignals und des Identitätssignals durch das kraftwagenseitige Startsystem (12);
- Überprüfen mittels der Steuereinrichtung (16), ob die mit dem Identitätssignal empfangenen Identitätsdaten mit in dem Startsystem abgespeicherten Identitätsdaten übereinstimmen; und
- Aktivieren der Starteinrichtung (20) mittels der Steuereinrichtung (16), falls die mit dem Identitätssignal empfangenen Identitätsdaten mit den in dem Startsystem abgespeicherten Identitätsdaten übereinstimmen.

2. Verfahren nach Anspruch 1,
**dadurch gekennzeichnet, dass**
die Überwachungseinrichtung (18) überprüft, ob sich der tragbare Codegeber (24) innerhalb des im Wesentlichen den Fahrgastraum des Kraftwagens (10) abdeckenden Überwachungsbereichs befindet, indem die Überwachungseinrichtung (18) ein Anfragesignal aussendet, der tragbare Codegeber (24) das Anfragesignal empfängt, falls sich dieser innerhalb des Überwachungsbereichs befindet und seinerseits ein Antwortsignal aussendet, welches die Überwachungseinrichtung (18) empfängt, wodurch diese erkennt, dass sich der tragbare Codegeber (24) innerhalb des Überwachungsbereichs befindet.

3. Verfahren nach Anspruch 1 oder 2,
**dadurch gekennzeichnet, dass**
die Überwachungseinrichtung (18) ausschließlich bei aktivierter Starteinrichtung (20) überprüft, ob sich der tragbare Codegeber (24) des Startsystems innerhalb des Überwachungsbereichs befindet.

4. Verfahren nach einem der vorhergehenden Ansprüche,
**dadurch gekennzeichnet, dass**
falls die mit dem Identitätssignal empfangenen Identitätsdaten nicht mit den in dem Startsystem abgespeicherten Identitätsdaten übereinstimmen, der tragbare Codegeber (24) innerhalb eines vorgegebenen Wirkbereichs einer Authentifizierungseinrichtung (22) des Startsystems positioniert werden kann und dann hinsichtlich seiner Berechtigung zum Aktivieren der Starteinrichtung (20) überprüft wird, und die Steuereinrichtung (16) die Starteinrichtung (20) aktiviert, falls eine Berechtigung vorliegt.

5. Verfahren nach einem der Ansprüche 1 bis 4,
**dadurch gekennzeichnet, dass**
falls zumindest eine der Türen des Kraftwagens (10) mittels des tragbaren Codegebers (24) ohne das Betätigen des Bedienelements (28) des tragbaren Codegebers (24) entriegelt wird, der tragbare Codegeber (24) innerhalb eines vorgegebenen Wirkbereichs einer Authentifizierungseinrichtung (22) des Startsystems positioniert und hinsichtlich seiner Berechtigung zum Aktivieren der Starteinrichtung (20) überprüft wird, und die Steuereinrichtung (16) die Starteinrichtung (20) aktiviert, falls eine Berechtigung vorliegt.

6. Verfahren nach einem der Ansprüche 1 bis 5,
**dadurch gekennzeichnet, dass**
falls zumindest eine der Türen des Kraftwagens (10) ohne den tragbaren Codegeber (24) entriegelt wird und sich der tragbare Codegeber (24) nicht innerhalb des Überwachungsbereichs befindet, die Starteinrichtung (20) nicht aktiviert wird.

7. Verfahren nach einem der vorhergehenden Ansprüche,
**dadurch gekennzeichnet, dass**
nach einem Betätigen der aktivierten Starteinrichtung (20) mittels der Überwachungseinrichtung (18) überprüft wird, ob sich der tragbare Codegeber (24) innerhalb des Überwachungsbereichs befindet, und ein Startvorgang eines Motors (14) des Kraftwagens (10) ausschließlich dann mittels der Starteinrichtung (20) initiiert wird, falls sich der tragbare Codegeber (24) innerhalb des Überwachungsbereichs befindet.

8. Verfahren nach einem der vorhergehenden Ansprüche,
**dadurch gekennzeichnet, dass**
bei laufendem Motor (14) nach einem Öffnen wenigstens einer den Fahrgastraum verschließenden Türen und/oder Fenster und/oder einer Schiebedachvorrichtung die Überwachungseinrichtung (18) überprüft, ob sich der tragbare Codegeber (24) innerhalb des Überwachungsbereichs befindet, und ein Warnsignal ausgegeben wird, falls sich der tragbare Codegeber (24) nicht innerhalb des Überwachungsbereichs befindet.

9. Verfahren nach einem der vorhergehenden Ansprüche,
**dadurch gekennzeichnet, dass**
während des drahtlosen Aussendens des Entriegelungssignals mittels des tragbaren Codegebers (24) drahtlos ein Identifizierungssignal ausgesendet wird, anhand dessen eine Überprüfung einer Berechtigung des tragbaren Codegebers (24) zum Entriegeln des Kraftwagens (10) durchgeführt wird.

10. Verfahren nach einem der vorhergehenden Ansprüche,
**dadurch gekennzeichnet, dass**
in dem Startsystem neue Identitätsdaten benutzerdefiniert abgespeichert und diese ebenfalls in dem tragbaren Codegeber (24) und/oder wenigstens einem weiteren tragbaren Codegeber abgespeichert werden.

11. Startsystem für einen Kraftwagen (10) mit einem eine Steuereinrichtung (16), eine Starteinrichtung (20), eine Überwachungseinrichtung (18) und eine Authentifizierungseinrichtung (22) umfassenden kraftwagenseitigen Startsystem (12) sowie wenigstens einem tragbaren Codegeber (24),
wobei
- das Startsystem dazu ausgelegt ist, eine Verriegelung des Kraftwagens (10) zu erkennen und die Überwachungseinrichtung (18) dazu ausgelegt ist, zu überprüfen, ob sich der tragbare Codegeber (24) innerhalb eines Überwachungsbereichs der Überwachungseinrichtung (18) befindet;
- die Steuereinrichtung (16) dazu ausgelegt ist, die Starteinrichtung (20) zu deaktivieren, falls sich der tragbare Codegeber (24) nicht innerhalb des Überwachungsbereichs befindet;
- der tragbare Codegeber (24) wenigstens ein Bedienelement (28) aufweist und dazu ausgelegt ist, ein ein Entriegeln zumindest einer Tür des Kraftwagens (10) initiierendes Entriegelungssignal sowie ein Identitätsdaten umfassendes Identitätssignal drahtlos auszusenden;
- das kraftwagenseitige Startsystem (12) dazu ausgelegt ist, das Entriegelungssignal und das Identitätssignal zu empfangen;
- die Steuereinrichtung (16) dazu ausgelegt ist, zu überprüfen, ob die mit dem Identitätssignal empfangenen Identitätsdaten mit in dem Startsystem abgespeicherten Identitätsdaten übereinstimmen; und
- die Steuereinrichtung (16) dazu ausgelegt ist, die Starteinrichtung (20) zu aktivieren, falls die mit dem Identitätssignal empfangenen Identitätsdaten mit den in dem Startsystem abgespeicherten Identitätsdaten übereinstimmen.

12. Kraftwagen mit einem Startsystem gemäß Anspruch 11.

## Claims

1. Method for operating a starting system for a motor vehicle (10), comprising the following steps:
- detecting, using the starting system, locking of the motor vehicle (10) and checking, using a monitoring device (18) in the starting system, whether a portable code transmitter (24) for the starting system is located within a monitoring region of the monitoring device (18);
- deactivating a starting device (20) of the starting system using a control device (16) of the starting system if the portable code transmitter (24) is not located within the monitoring region;
- operating an operating element (28) of the portable code transmitter (24) and wirelessly transmitting, using the portable code transmitter (24), an unlocking signal, that initiates the unlocking of at least one door of the motor vehicle (10), and an identity signal, that comprises identity data;
- receiving, by means of the motor vehicle-based starting system (12), the unlocking signal and the identity signal;
- checking, using the control device (16), whether the identity data received with the identity signal match identity data stored in the starting system; and
- activating the starting device (20) using the control device (16) if the identity data received with the identity signal match the identity data stored in the starting system.

2. Method according to claim 1, **characterised in that** the monitoring device (18) checks whether the portable code transmitter (24) is located within the monitoring region, which basically comprises the passenger compartment of the motor vehicle (10), **in that** said monitoring device (18) transmits a request signal, and the portable code transmitter (24) receives the request signal if it is located within the monitoring region, and in turn transmits a response signal which the monitoring device (18) receives, whereby said monitoring device detects that the portable code transmitter (24) is located within the monitoring region.

3. Method according to either claim 1 or claim 2, **characterised in that** the monitoring device (18) checks whether the portable code transmitter (24) of the starting system is located within the monitoring region, only when the starting device (20) is activated.

4. Method according to any of the preceding claims, **characterised in that**, if the identity data received with the identity signal do not match the identity data stored in the starting system, the portable code transmitter (24) can be positioned within a predetermined operating region of an authentication device (22) of the starting system and is then checked with regard to its authorisation to activate the starting device (20), and the control device (16) activates the starting device (20) if authorisation is available.

5. Method according to any of claims 1 to 4, **characterised in that**, if at least one of the doors of the motor vehicle (10) is unlocked using the portable code transmitter (24) without operation of the operating element (28) of the portable code transmitter (24), the portable code transmitter (24) is positioned within a predetermined operating region of an authentication device (22) of the starting system and is checked with regard to its authorisation to activate the starting device (20), and the control device (16) activates the starting device (20) if authorisation is available.

6. Method according to any of claims 1 to 5, **characterised in that**, if at least one of the doors of the motor vehicle (10) is unlocked without the portable code transmitter (24) and the portable code transmitter (24) is not located within the monitoring region, the starting device (20) is not activated.

7. Method according to any of the preceding claims, **characterised in that**, after operation of the activated starting device (20) by means of the monitoring device (18), it is checked whether the portable code transmitter (24) is located within the monitoring region, and a starting procedure for an engine (14) of the motor vehicle (10) is initiated using the starting device (20) only if the portable code transmitter (24) is located within the monitoring region,

8. Method according to any of the preceding claims, **characterised in that**, when the engine (14) is running and at least one of the doors and/or windows and/or a sliding roof apparatus, which close/s the passenger compartment, are/is open, the monitoring device (18) checks whether the portable code transmitter (24) is located within the monitoring region, and a warning signal is emitted if the portable code transmitter (24) is not located within the monitoring region.

9. Method according to any of the preceding claims, **characterised in that**, during wireless transmission of the unlocking signal by means of the portable code transmitter (24), an identification signal is transmitted wirelessly, on the basis of which a check is carried out with regard to an authorisation of the portable code transmitter (24) to unlock the motor vehicle (10).

10. Method according to any of the preceding claims, **characterised in that** new identity data are stored in the starting system on a user-defined basis, and said data are also stored in the portable code transmitter (24) and/or in at least one additional portable code transmitter.

11. Starting system for a motor vehicle (10) having a motor vehicle-based starting system (12) comprising a control device (16), a starting device (20), a monitoring device (18) and an authentication device (22), and having at least one portable code transmitter (24), wherein
- the starting device is designed to detect locking of the motor vehicle (10) and the monitoring device (18) is designed to check whether the portable code transmitter (24) is located within a monitoring region of the monitoring device (18);
- the control device (16) is designed to deactivate the starting device (20) if the portable code transmitter (24) is not located within the monitoring region;
- the portable code transmitter (24) has at least one operating element (28) and is designed to wirelessly transmit an unlocking signal that initiates the unlocking of at least one door of the motor vehicle (10) and an identity signal that comprises identity data;
- the motor vehicle-based starting system (12) is designed to receive the unlocking signal and the identity signal;
- the control device (16) is designed to check whether the identity data received with the identity signal match identity data stored in the starting system; and
- the control device (16) is designed to activate the starting device (20) if the identity data received with the identity signal match the identity data stored in the starting system.

12. Motor vehicle having a starting system according to claim 11.

## Revendications

1. Procédé de fonctionnement d'un système de démarrage pour un véhicule automobile (10), comprenant les étapes consistant à :
- reconnaître un verrouillage du véhicule automobile (10) par le système de démarrage et vérifier au moyen d'un dispositif de contrôle (18) du système de démarrage si un émetteur de code portatif (24) se trouve dans la zone de contrôle du dispositif de contrôle (18) ;
- désactiver un dispositif de démarrage (20) du système de démarrage au moyen d'un dispositif de commande (16) du système de démarrage au cas où l'émetteur de code portatif (24) ne se trouve pas dans la zone de contrôle ;
- commander un élément de réglage (28) de l'émetteur de code portatif (24) et envoyer sans fil un signal de déverrouillage initiant le déverrouillage au moins d'une porte du véhicule automobile (10) ainsi qu'un signal d'identité comprenant des données d'identité par l'émetteur de code portatif (24) ;
- recevoir le signal de déverrouillage et le signal d'identité par le système de démarrage côté véhicule (12) ;
- vérifier au moyen du dispositif de commande (16) si les données d'identité reçues avec le signal d'identité coïncident avec les données d'identité mémorisées dans le système de démarrage ; et
- activer le dispositif de démarrage (20) au moyen du dispositif de commande (16) au cas où les données d'identité reçues avec le signal d'identité coïncident avec les données d'identité mémorisées dans le système de démarrage.

2. Procédé selon la revendication 1,
**caractérisé en ce que** :
le dispositif de contrôle (18) vérifie si l'émetteur de code portatif (24) se trouve dans la zone de contrôle couvrant sensiblement l'intérieur du véhicule automobile (10), le dispositif de contrôle (18) envoyant en l'occurrence un signal de demande, l'émetteur de code portatif (24) reçoit le signal de demande au cas où ledit émetteur se trouve dans la zone de contrôle et envoie à son tour un signal de réponse que reçoit le dispositif de contrôle (18) et par lequel celui-ci reconnaît que l'émetteur de code portatif (24) se trouve dans la zone de contrôle.

3. Procédé selon la revendication 1 ou la revendication 2, **caractérisé en ce que** :
le dispositif de contrôle (18) vérifie exclusivement lorsque le dispositif de démarrage (20) est activé si l'émetteur de code portatif (24) du système de démarrage se trouve dans la zone de contrôle.

4. Procédé selon l'une quelconque des revendications précédentes,
**caractérisé en ce que**,
au cas où les données d'identité reçues avec le signal d'identité ne coïncident pas avec les données d'identité mémorisées dans le système de démarrage, l'émetteur de code portatif (24) peut être positionné dans une zone active prédéterminée d'un dispositif d'authentification (22) du système de démarrage et est ensuite contrôlé quant à son habilitation à activer le dispositif de démarrage (20), et le dispositif de commande (16) active le dispositif de démarrage au cas où il y a habilitation.

5. Procédé selon l'une quelconque des revendications 1 à 4,
**caractérisé en ce que**,
au cas où au moins l'une des portes du véhicule automobile (10) est déverrouillée au moyen de l'émetteur de code portatif (24) sans commander l'élément de réglage (28) de l'émetteur de code portatif (24), l'émetteur de code portatif (24) est positionné dans une zone active prédéterminée d'un dispositif d'authentification (22) du système de démarrage et est contrôlé quant à son habilitation à activer le dispositif de démarrage (20), et le dispositif de commande (16) active le dispositif de démarrage (20) au cas où il y a habilitation.

6. Procédé selon l'une quelconque des revendications 1 à 5,
**caractérisé en ce que**,
au cas où au moins l'une des portes du véhicule automobile (10) est déverrouillée sans l'émetteur de code portatif (24) et que l'émetteur de code portatif (24) ne se trouve pas dans la zone de contrôle, le dispositif de démarrage (20) n'est pas activé.

7. Procédé selon l'une quelconque des revendications précédentes,
**caractérisé en ce que**,
après une commande du dispositif de démarrage activé (20), on vérifie au moyen du dispositif de contrôle (18) si l'émetteur de code portatif (24) se trouve dans la zone de contrôle et une opération de démarrage d'un moteur (14) du véhicule automobile (10) sera initiée ensuite automatiquement au moyen du dispositif de démarrage (20) au cas où l'émetteur de code portatif (24) se trouve dans la zone de contrôle.

8. Procédé selon l'une quelconque des revendications précédentes,
**caractérisé en ce que**,
lorsque le moteur (14) est en marche, après une ouverture au moins de l'une des portes fermant l'intérieur et/ou des fenêtres et/ou d'un dispositif de toit ouvrant, le dispositif de contrôle (18) vérifie si l'émetteur de code portatif (24) se trouve dans la zone de contrôle et un signal d'avertissement est délivré au cas où l'émetteur de code portatif (24) ne se trouve pas dans la zone de contrôle.

9. Procédé selon l'une quelconque des revendications précédentes,
**caractérisé en ce que**,
au cours de l'envoi sans fil du signal de déverrouillage au moyen de l'émetteur de code portatif (24), un envoi d'identification est envoyé sans fil, permettant de contrôler l'habilitation de l'émetteur de code portatif (24) pour déverrouiller le véhicule automobile (10).

10. Procédé selon l'une quelconque des revendications précédentes,
**caractérisé en ce que**,
dans le système de démarrage, de nouvelles données d'identité sont mémorisées de manière définie par l'utilisateur et ces données sont également mémorisées dans l'émetteur de code portatif (24) et/ou au moins dans un autre émetteur de code portatif.

11. Système de démarrage pour un véhicule automobile (10), comprenant un système de démarrage côté véhicule (12) comprenant un dispositif de commande (16), un dispositif de démarrage (20), un dispositif de contrôle (18) et un dispositif d'authentification (22) ainsi qu'au moins un émetteur de code portatif (24), dans lequel :
- le système de démarrage est conçu de manière à reconnaître un verrouillage du véhicule automobile (10) et le dispositif de contrôle (18) est conçu de manière à vérifier si l'émetteur de code portatif (24) se trouve dans la zone de contrôle du dispositif de contrôle (18) ;
- le dispositif de commande (16) est conçu pour désactiver le dispositif de démarrage (20) au cas où l'émetteur de code portatif (24) ne se trouve pas dans la zone de contrôle ;
- l'émetteur de code portatif (24) présente au moins un élément de réglage (28) et est conçu pour envoyer sans fil un signal de déverrouillage initiant le déverrouillage au moins d'une porte du véhicule automobile (10) ainsi qu'un signal d'identité comprenant des données d'identité (24) ;
- le système de démarrage côté véhicule (12) est conçu pour recevoir le signal de déverrouillage et le signal d'identité ;
- le dispositif de commande (16) est conçu pour vérifier si les données d'identité reçues avec le signal d'identité coïncident avec les données d'identité mémorisées dans le système de démarrage ; et
- le dispositif de commande (16) est conçu pour activer le dispositif de démarrage (20) au cas où les données d'identité reçues avec le signal d'identité coïncident avec les données d'identité mémorisées dans le système de démarrage.

12. Véhicule automobile équipé d'un système de démarrage selon la revendication 11.
